# EUROPÄISCHE PATENTSCHRIFT

(11) **EP 0 867 267 B1**
(45) Veröffentlichungstag und Bekanntmachung des Hinweises auf die Patenterteilung: **17.10.2001**
(21) Anmeldenummer: 98105681.5
(22) Anmeldetag: 27.03.1998
(51) Int. Cl.: B29C 47/00, B32B 27/00, C08K 3/10, B29C 47/10, H01M 2/16, H01M 10/40

(54) **Verfahren zur Herstellung von Formkörpern für Lithiumionenbatterien**
Method for manufacturing formed bodies for lithium ion batteries
Procédé pour la fabrication d'objets formés pour batteries à ions lithium

(30) Priorität: 27.03.1997 DE 19713046
(43) Veröffentlichungstag der Anmeldung: 30.09.1998
(73) Patentinhaber: EMTEC Magnetics GmbH, 67059 Ludwigshafen (DE)
(72) Erfinder: Bauer, Stephan, Dr., 67126 Hochdorf-Assenheim (DE); Bronstert, Bernd, Dr., 67166 Otterstadt (DE); Burkhardt, Uwe, 67468 Frankenstein (DE); Weingart, Franz, Dr., 69181 Leimen (DE); Kessler, Thomas, 67105 Schifferstadt (DE); Möhwald, Helmut, Dr., 76855 Annweiler (DE); Hennenberger, Florian, 67117 Limburgerhof (DE)
(74) Vertreter: Geissler, Bernhard, Dr. jur., Dipl.-Phys.

(56) Entgegenhaltungen:
- WO-A-95/06332
- US-A- 4 568 716
- US-A- 5 093 898

## Beschreibung

Die vorliegende Erfindung betrifft ein Verfahren zur Herstellung von u.a. als Festelektrolyte, Separatoren und Elektroden für elektrochemische Zellen geeigneten Formkörpern, vorzugsweise von folienförmigen Formkörpern für elektrochemische Zellen durch Schmelzextrusion; Festelektrolyte, Separatoren, Elektroden, Sensoren, elektrochrome Fenster, Displays, Kondensatoren und ionenleitende Folien an sich, die jeweils einen derartigen Formkörper umfassen; sowie elektrochemische Zellen mit solchen Festelektrolyten, Separatoren und/oder Elektroden.

Elektrochemische, insbesondere wiederaufladbare Zellen sind allgemein bekannt, beispielsweise aus "Ullmann's Encyclopedia of Industrial Chemistry", 5. Ed., Vol A3, VCH Verlagsgesellschaft mbH, Weinheim, 1985, Seite 343-397.

Unter diesen Zellen nehmen die Lithiumbatterien und die Lithiumionenbatterien insbesondere als Sekundärzellen aufgrund ihrer hohen spezifischen Energiespeicherdichte eine besondere Stellung ein.

Solche Zellen enthalten in der Kathode, wie u.a. in obigem Zitat aus "Ullmann" beschrieben, Lithiumionen und Mangan-, Cobalt-, Vanadium- oder Nickelionen enthaltende Mischoxide, wie sie im stöchiometrisch einfachsten Fall als LiMn₂O₄, LiCoO₂, LiV₂O₅ oder LiNiO₂ beschrieben werden können.

Mit Verbindungen, die Lithiumionen in ihr Gitter einbauen können, wie Graphit, reagieren diese Mischoxide reversibel unter Ausbau der Lithiumionen aus dem Kristallgitter, wobei in diesem die Metallionen wie Mangan-, Cobalt- oder Nickelionen oxidiert werden. Diese Reaktion läßt sich in einer elektrochemischen Zelle zur Stromspeicherung nutzen, indem man die Lithiumionen aufnehmende Verbindung, also das Anodenmaterial, und das lithiumhaltige Mischoxid, also das Kathodenmaterial, durch einen Elektrolyten trennt, durch welchen die Lithiumionen aus dem Mischoxid in das Anodenmaterial wandern (Ladevorgang).

Die zur reversiblen Speicherung von Lithiumionen geeigneten Verbindungen werden dabei üblicherweise auf Ableitelektroden mittels eines Bindemittels fixiert.

Bei der Aufladung der Zelle fließen Elektronen durch eine äußere Spannungsquelle und Lithiumkationen durch den Elektrolyten zum Anodenmaterial. Bei der Nutzung der Zelle fließen die Lithiumkationen durch den Elektrolyten, die Elektronen hingegen durch einen Nutzwiderstand vom Anodenmaterial zum Mischoxid (Kathodenmaterial).

Zur Vermeidung eines Kurzschlusses innerhalb der elektrochemischen Zelle befindet sich zwischen den beiden Elektroden eine elektrisch isolierende, für Lithiumkationen aber durchgängige Schicht, ein sogenannter Festelektrolyt oder Separator.

Festelektrolyte und Separatoren bestehen bekanntermaßen aus einem Trägermaterial, in das eine dissoziierbare, Lithiumkationen enthaltende Verbindung zur Erhöhung der Lithiumionenleitfähigkeit und üblicherweise weitere Zusatzstoffe wie Lösungsmittel inkorporiert werden.

Unter einem Festelektrolyt versteht man dabei ein Material, das entweder lösungsmittelfrei in den elektrochemischen Zellen eingesetzt werden kann, oder das im Falle der Verwendung eines Lösungsmittel dieses weitgehend physikalisch gebunden enthält.

Zur Herstellung der Festelektrolyte oder Separatoren trägt man im allgemeinen eine Lösung aus dem Trägermaterial, der Lithiumkationen enthaltenden Verbindung und gegebenenfalls weiterer Zusatzstoffe auf einen Träger auf, wonach man das Lösungsmittel abdampft.

Als Trägermaterial schlägt z.B. die US 5 540 741 und die US 5 478 668 ein Copolymerisat aus Vinylidendifluorid und Hexafluorpropen vor.

Für die Herstellung dieser Batteriefolien gemäß der obigen Druckschriften werden Feststoff, Weichmacher und Bindemittel dispergiert (siehe Tabelle).

| | **Anode** | **Kathode** | **Separator** |
|---|---|---|---|
| **Feststoff** | Graphit | LiMn₂O₄ | Aerosil |
| **Weichmacher** | Dibutylphthalat | Dibutylphthalat | Dibutylphthalat |
| **Bindemittel** | COPO (PVDF/HFP) | COPO (PVDF/HFP) | COPO (PVDF/HFP) |
| **Lösungsmittel** | Aceton | Aceton | Aceton |
| **Extraktionsmittel** | Diethylether | Diethylether | Diethylether |

Die Dispersion wird anschließend vergossen, und der Film wird getrocknet. Anschließend wird der Weichmacher mit Diethylether extrahiert. Das Bindemittel ist ein statistisches Copolymer aus Vinylidenfluorid und Hexafluorpropen (8-25%).

Weiter offenbart die WO 95/06332 die Herstellung von Formkörpern aus einem Vinylidenfluorid/Hexafluorpropylencopolymer, Weichmacher wie beispielsweise Dibutylphthalat , Propylencarbonat, Etylencarbonat und Elektrolytsalzen wie beispielsweise Aluminiumdioxid oder Siliziumdioxid. Diese Masse wird entweder heiß verpreßt oder in einem Lösungsmittel gelöst und auf einem Substrat aufgebracht, gefolgt von der Entfernung des Lösungsmittels und Extraktion eines Teils des Weichmachers. Diese Masse wird dabei in einer Suspension aufgeschlämmt und erst anschließend verarbeitet. Dies führt zu einer wenig homogenen Verteilung der entsprechenden Füllstoffe.

Die im Stand der Technik beschriebenen Verfahren weisen die folgenden Nachteile auf:
1. Verwendung von organischen Lösungsmitteln
2. Film muß getrocknet werden
3. Extraktion des Weichmacher ist erforderlich
4. Extraktionsmittel ist explosibel
5. Weichmacher wird nicht zu 100% aus der Folie extrahiert.

Demgemäß liegt der vorliegenden Erfindung die Aufgabe zugrunde, ein verbessertes Verfahren zur Herstellung derartiger Formkörper bereitzustellen, sowie diese Formkörper an sich, die bedingt durch den Herstellungsprozeß eine besondere Mikrostruktur und verbesserte mechanische Eigenschaften aufweisen, bereitzustellen.

Bedingt durch insbesondere die Anwesenheit eines Feststoffes III und der hier verwendeten speziellen Verfahrensparameter, wie nachfolgend definiert, werden Formkörper erhalten, die, bei der Verwendung als Festelektrolyt, Separator oder Elektrode, verglichen mit den bislang bekannten Systemen, eine verbesserte Kurzschlußfestigkeit, eine erhöhte Druckfestigkeit, insbesondere bei erhöhten Temperaturen von oberhalb 120 °C, sowie eine größere Porosität aufweisen, und darüber hinaus in der Lage sind, die Bildung von Li-Dendriten nachhaltig zu unterdrücken. Außerdem bedingt die Anwesenheit des Feststoffs III eine verbesserte Zyklenstabilität und eine höhere Strombelastbarkeit einer elektrochemischen Zelle. Bei der Verwendung der bevorzugt eingesetzten basischen Feststoffe IIIa wird ferner die während des Betriebs einer elektrochemischen Zelle gebildete Säure abgefangen bzw. neutralisiert.

Die Erfindung betrifft demnach ein Verfahren zur Herstellung eines Formkörpers, vorzugsweise eines folienförmigen Formkörpers, das folgende Stufe umfaßt:
I) Compoundieren und Schmelzextrudieren einer Mischung I, die ein Gemisch II umfaßt, das enthält:
a) 1 bis 95 Gew.-% mindestens eines Feststoffs III mit einer Primärpartikelgröße von 5 nm bis 20 *µ* m, das ausgewählt wird aus der Gruppe bestehend aus einem elektrochemisch inerten Feststoff IIIa, einer beim Laden zur Abgabe von Lithiumionen befähigte Verbindung IIIb und einer beim Laden zur Aufnahme von Lithiumionen befähigten Verbindung IIIc, und einem Gemisch des Feststoffs IIIa mit der Verbindung IIIb oder der Verbindung IIIc,
b) 5 bis 99 Gew.-% mindestens eines Copolymers IV aus Vinylidenfluorid (VdF) und Hexafluorpropylen (HFP) mit einem Gehalt an HFP von 8 bis 25 Gew.-%, und
c) 1 bis 200 Gew.-%, bezogen auf die Gesamtmenge der Komponenten a) und b), eines Weichmachers V, der ausgewählt wird aus der Gruppe bestehend aus Dibutylphthalat, Dimethylphthalat, Diethylphthalat, Tris(butoxy)ethylphosphat, Propylencarbonat, Ethylencarbonat, Trimethyltrimellitat und Gemischen aus zwei oder mehr davon
wobei der Gewichtsanteil des Gemischs II an der Mischung I 1 bis 100 Gew.-% beträgt.

Ferner betrifft sie ein Verfahren, wie oben definiert, wobei der Feststoff III ein elektrochemisch inerter Feststoff IIIa ist, der ausgewählt wird aus der Gruppe bestehend aus einem anorganischen Feststoff, vorzugsweise einem anorganischen basischen Feststoff, ausgewählt aus der Gruppe bestehend aus Oxiden, Mischoxiden, Carbonaten, Silicaten, Sulfaten, Phosphaten, Amiden, Imiden, Nitriden und Carbiden der Elemente der I., II., III. oder IV. Hauptgruppe oder der IV. Nebengruppe des Periodensystems; einem Polymer, ausgewählt aus der Gruppe bestehend aus Polyethylen, Polypropylen, Polystyrol, Polytetrafluorethylen, Polyvinylidenfluorid, Polyamiden, Polyimiden; einer Feststoffdispersion enthaltend ein derartiges Polymer; und einem Gemisch aus zwei oder mehr davon, wobei ein Formkörper erhalten wird, der als Festelektrolyt und/oder Separator verwendet werden kann.

Beispielhaft zu nennen sind insbesondere: Oxide, wie z.B. Siliciumdioxid, Aluminiumoxid, Magnesiumoxid oder Titandioxid, Mischoxide, beispielsweise der Elemente Silicium, Calcium, Aluminium, Magnesium, Titan; Silicate, wie z.B. Leiter-, Ketten-, Schicht- und Gerüstsilicate; Sulfate, wie z.B. Alkali- und Erdalkalimetallsulfate; Carbonate, beispielsweise Alkali- und Erdalkalimetallcarbonate, wie z.B. Calcium-, Magnesium oder Bariumcarbonat oder Lithium-, Kalium oder Natriumcarbonat; Phosphate, beispielsweise Apatite; Amide; Imide; Nitride; Carbide; Polymere, wie z.B. Polyethylen, Polypropylen, Polystyrol, Polytetrafluorethylen, Polyvinylidenfluorid, Polyamide, Polyimide, oder andere Thermoplasten, Duromeren oder Mikrogele, Feststoffdispersionen, insbesondere solche, die die oben genannten Polymere enthalten, sowie Gemische aus zwei oder mehr der oben genannten Feststoffe.

Besonders geeignet sind dabei basische Feststoffe. Unter basischen Feststoffen sollen dabei solche verstanden werden, deren Gemisch mit einem flüssigen, Wasser enthaltenden Verdünnungsmittel, das selber einen pH-Wert von höchstens 7 aufweist, einen höheren pH-Wert als dieses Verdünnungsmittel aufweist.

Die Feststoffe sollten vorteilhaft in der als Elektrolyt verwendeten Flüssigkeit weitestgehend unlöslich sowie in dem Batteriemedium elektrochemisch inert sein.

Ferner betrifft sie ein Verfahren, wobei der Feststoff III eine beim Laden zur Abgabe von Lithiumionen befähigte Verbindung IIIb ist, die ausgewählt wird aus der Gruppe bestehend aus LiCoO₂, LiNiO₂, LixMnO₂ (0<x≤1), LiₓMn₂O₄ (0<x≤2), LiₓMoO₂ (0<x≤2), LiₓMnO₃ (0<x≤1), LiₓMnO₂ (0<x≤2), LiₓMn₂O₄ (0<x≤2), LiₓV₂O₄ (0<x≤2.5), LiₓV₂O₃ (0<x≤3.5), LiₓVO₂ (0<x≤1), LiₓWO₂ (0<x≤1), LiₓWO₃ (0<x≤1), LiₓTiO₂ (0<x≤1), LiₓTi₂O₄ (0<x≤2), LiₓRuO₂ (0<x≤1), LiₓFe₂O₃ (0<x≤2), LiₓFe₃O₄ (0<x≤2), LiₓCr₂O₃ (0<x≤3), LiₓCr₃O₄ (0<x≤3.8), LiₓV₃S₅ (0<x≤1.8), LiₓTa₂S₂ (0<x≤1), LiₓFeS (0<x≤1), LiₓFeS₂ (0<x≤1), LiₓNbS₂ (0<x≤2.4), LiₓMoS₂ (0<x≤3), LiₓTiS₂ (0<x≤2), LiₓZrS₂ (0<x≤2), LiₓNbSe₂ (0<x≤3), LiₓVSe₂ (0<x≤1), LiₓNiPS₂ (0<x≤1,.5), LiₓFePS₂ (0<x≤1.5), einem Gemisch aus zwei oder mehr davon, und einem Gemisch der Verbindung IIIb mit dem Feststoff IIIa, und die Mischung I zusätzlich 0,1 bis 20 Gew.-%, bezogen auf das Gemisch II, Leitruß enthält, wobei ein Formkörper erhalten wird, der insbesondere als Kathode verwendet werden kann.

Darüber hinaus betrifft sie ein Verfahren, wobei der Feststoff III eine beim Laden zur Aufnahme von Lithiumionen befähigte Verbindung IIIc ist, die ausgewählt wird aus der Gruppe bestehend aus Lithium, einer Lithium enthaltenden Metallegierung, micronisiertem Kohlenstoffruß, natürlichem und synthetischem Graphit, synthetisch graphitiertem Kohlestaub, einer Kohlefaser, Titanoxid, Zinkoxid, Zinnoxid, Molybdänoxid, Wolframoxid, Titancarbonat, Molybdäncarbonat, Zinkcarbonat, einem Gemisch aus zwei oder mehr davon, und einem Gemisch der Verbindung IIIc mit dem Feststoff IIIa, und die Mischung I zusätzlich bis zu 20 Gew.-%, bezogen auf das Gemisch II, Leitruß enthält, wobei ein Formkörper erhalten wird, der insbesondere als Anode verwendet werden kann.

Besonders geeignet sind Feststoffe III, die eine Primärpartikelgröße von 5 nm bis 20 *µ*m, vorzugsweise 0,01 bis 10 *µ*m und insbesondere 0,1 bis 5 *µ*m aufweisen, wobei die angegebenen Partikelgrößen durch Elektronenmikroskopie ermittelt werden. Der Schmelzpunkt der Feststoffe III liegt vorzugsweise über der für die elektrochemische Zelle üblichen Betriebstemperatur, wobei sich Schmelzpunkte von über 120°C, insbesondere von über 150 °C als besonders günstig erwiesen haben.

Dabei können die Feststoffe III bzgl. ihrer äußeren Form symmetrisch sein, d.h. ein Größenverhältnis Höhe : Breite : Länge (Aspektverhältnis) von ungefähr 1 aufweisen und als Kugeln, Granalien, annähernd runde Gebilde, aber auch in Form von beliebigen Polyedern, wie z.B. als Quader, Tetraeder, Hexaeder, Octaeder oder als Bipyramide vorliegen, oder verzerrt oder asymmetrisch sein, d.h. ein Größenverhältnis Höhe : Breite : Länge (Aspektverhältnis) von ungleich 1 aufweisen und z.B. als Nadeln, asymmetrische Tetraeder, asymmetrische Bipyramiden, asymmetrische Hexa- oder Octaeder, Plättchen, Scheiben oder als faserförmige Gebilde vorliegen. Sofern die Feststoffe als asymmetrische Teilchen vorliegen, bezieht sich die oben angegebene Obergrenze für die Primärpartikelgröße auf die jeweils kleinste Achse.

Bei der Herstellung der als Kathode oder Anode verwendbaren Formkörper wird der Leitruß, sofern vorhanden, vorzugsweise in Form eines Master-Batch zu dem Gemisch II gegeben. Bei dem Master-Batch handelt es sich um eine Zusammensetzung, die zu 20 bis 50 Gew.-% Leitruß, 5 bis 30 Gew.-% polymeres Bindemittel IV und 30 bis 75 Gew.-% Weichmacher IV enthält. Dabei wird die Menge und Zusammensetzung des Master-Batches so gewählt, daß, bezogen auf das Gemisch II die Menge des insgesamt zugegebenen Leitsalzes 20 Gew.-% nicht übersteigt. Vorzugsweise wird das Master-Batch durch Compoundieren und Schmelzextrudieren der oben genannten Komponenten hergestellt.

Die Gemische II sollen erfindungsgemäß zu 1 bis 95 Gew.-%, vorzugsweise 25 bis 90 Gew.-% und insbesondere 30 bis 70 Gew.-% aus einem Feststoff III und zu 5 bis 99 Gew.-%, vorzugsweise 10 bis 75 Gew.-% und insbesondere 30 bis 70 Gew.-% aus einem Copolymer IV bestehen, wobei das Copolymer IV vorteilhaft ein mittleres Molekulargewicht (Zahlenmittel) von 5.000 bis 100.000.000, vorzugsweise 50.000 bis 8.000.000, aufweisen sollte.

Folgende weitere Einsatzstoffe werden bei der Herstellung des Formkörpers, bzw. in der verwendeten Mischung I bzw. dem Gemisch II verwendet:

Als Copolymer IV werden Copolymere aus Vinylidenfluorid (VdF) und Hexafluorpropylen (HFP) mit einem Gehalt an HFP von 8 bis 25 Gew.-% eingesetzt. Diese Copolymere sind an sich bereits u.a. aus den eingangs erwähnten US 5 540 741 und US 5 478 668 bekannt.

Als Weichmacher V können Dibutylphthalat, Dimethylphthalat, Diethylphthalat, Tris(butoxyethyl)phosphat, Propylencarbonat, Ethylencarbonat, Trimethyltrimellitat sowie Gemische aus zwei oder mehr davon verwendet werden.

Die Menge des Weichmachers, bezogen auf das Gesamtgewicht des Feststoffs III und des polymeren Bindemittels IV beträgt 1 bis 200 Gew.-%, vorzugsweise 10 bis 100 Gew.-%.

Als Leitsalze können die allgemein bekannten und beispielsweise in der EP-A 96 629 beschriebenen Leitsalze verwendet werden. Dabei eignen sich insbesondere Verbindungen wie z.B. LiPF₆, LiAsF₆, LiSbF₆, LiClO₄, LiN(CF₃SO₂)₂, LiBF₄ oder LiCF₃SO₃ sowie Mischungen solcher Verbindungen. Diese Leitsalze werden in Mengen von 0,1 bis 50 Gew.-%, vorzugsweise 1 bis 10 Gew.-%, jeweils bezogen auf das erfindungsgemäße Gemisch, eingesetzt.

Gegebenenfalls können Dispergierharze zugesetzt werden, um die Dispergierung der Feststoffe III zu verbessern, wie beschrieben im Patent EP 940197.

Als Trägermaterial für die erfindungsgemäß hergestellten Formkörper kommen die üblicherweise für Elektroden verwendeten Materialien, vorzugsweise Metalle wie Aluminium und Kupfer, in Betracht. Ebenso können temporäre Zwischenträger, wie Folien, insbesondere Polyesterfolien, wie Polyethylenterephthalatfolien, verwendet werden. Solche Folien können vorteilhaft mit einer Trennschicht vorzugsweise aus Polysiloxanen versehen sein.

Ferner können die erfindungsgemäß verwendeten Mischungen nach oder während der Schmelzextrusion, vorzugsweise nach derselben, in an sich bekannter Weise vernetzt werden.

Dies geschieht beispielsweise durch Bestrahlung mit ionischer oder ionisierender Strahlung, Elektronenstrahl, vorzugsweise mit einer Beschleunigungsspannung zwischen 20 und 2.000 kV und einer Strahlendosis zwischen 5 und 50 Mrad, UV- oder sichtbarem Licht, wobei in üblicher Weise vorteilhaft ein Initiator wie Benzildimethylketal oder 1,3,5-Trimethylbenzoyl-triphenylphosphinoxid in Mengen von insbesondere höchstens 1 Gew.-% bezogen auf das polymere Bindemittel zugegeben werden und die Vernetzung innerhalb von im allgemeinen 0,5 bis 15 Minuten vorteilhaft unter Inertgas wie Stickstoff oder Argon durchgeführt werden kann, durch thermische radikalische Polymerisation, vorzugsweise bei Temperaturen von über 60 °C, wobei man vorteilhaft einen Initiator wie Azo-bis-isobutyronitril in Mengen von im allgemeinen höchstens 5 Gew.-%, vorzugsweise 0,05 bis 1 Gew.-% bezogen auf das polymere Bindemittel zugeben kann, durch elektrochemisch induzierte Polymerisation oder durch ionische Polymerisation erfolgen, beispielsweise durch säurekatalysierte kationische Polymerisation, wobei als Katalysator in erster Linie Säuren, vorzugsweise Lewissäuren wie BF₃, oder insbesondere LiBF₄ oder LiPF₆ in Betracht kommen. Lithiumionen enthaltende Katalysatoren wie LiBF₄ oder LiPF₆ können dabei vorteilhaft im Festelektrolyt oder Separator als Leitsalz verbleiben.

Weiterhin betrifft die vorliegende Erfindung einen Formkörper, vorzugsweise einen folienförmigen Formkörper, erhältlich durch ein Verfahren, das folgende Stufe umfaßt:
I) Compoundieren und Schmelzextrudieren einer Mischung I, die ein Gemisch II umfaßt, das enthält:
a) 1 bis 95 Gew.-% mindestens eines Feststoffes III mit einer Primärpartikelgröße von 5 nm bis 20 *µ* m, das ausgewählt wird aus der Gruppe bestehend aus einem elektrochemisch inerten Feststoffs IIIa, einer beim Laden zur Abgabe von Lithiumionen Verbindung IIIb und einer beim Laden zur Aufnahme von Lithiumionen befähigten Verbindung IIIc, und einem Gemisch des Feststoffs IIIa mit der Verbindung IIIb oder der Verbindung IIIc
b) 5 bis 99 Gew.-% mindestens eines Copolymers IV aus Vinylidenfluorid (VdF) und Hexafluorpropylen (HFP) mit einem Gehalt an HFP von 8 bis 25 Gew.-%, und
c) 1 bis 200 Gew.-%, bezogen auf die Gesamtmenge der Komponenten a) und b), eines Weichmachers V, der ausgewählt wird aus der Gruppe bestehend aus Dibutylphthalat, Dimethylphthalat, Diethylphthalat, Tris(butoxyethyl)phosphat, Propylencarbonat, Ethylencarbonat, Trimethyltrimellitat und Gemischen aus zwei oder mehr davon
wobei der Gewichtsanteil des Gemischs II an der Mischung I 1 bis 100 Gew.-% beträgt.

Ferner betrifft die vorliegende Erfindung einen Verbundkörper, vorzugsweise in Form einer Folie, weiter bevorzugt in Form einer Folie mit einer Gesamtdicke von 15 bis 1500 *µ*m, insbesondere mit einer Gesamtdicke von 50 bis 500 *µ*m, erhältlich durch ein Verfahren, das die folgenden Stufen umfaßt:
(I) Herstellen mindestens einer ersten Schicht durch Compoundieren und Schmelzextrudieren einer wie oben definierten Mischung I, die ein Gemisch II umfaßt, das einen Feststoff IIIb, oder einen Feststoff IIIc, wie jeweils oben definiert, enthält;
(II) Herstellen mindestens einer zweiten Schicht durch Compoundieren und Schmelzextrudieren einer wie oben definierten Mischung I, die ein Gemisch II umfaßt, das einen Feststoff IIIa, wie hierin definiert, enthält und frei ist von einem Feststoff IIIb oder einem Feststoff IIIc, und
(III) anschließendes Zusammenbringen der mindestens einen ersten Schicht mit der mindestens einen zweiten Schicht durch ein herkömmliches Beschichtungsverfahren.

Ferner betrifft die vorliegende Erfindung ein Verfahren zur Herstellung eines derartigen Verbundkörpers, das die folgenden Stufen umfaßt:
(I) Herstellen mindestens einer ersten Schicht durch Compoundieren und Schmelzextrudieren einer wie oben definierten Mischung I, die ein Gemisch II umfaßt, das einen Feststoff IIIb, oder einen Feststoff IIIc, wie jeweils oben definiert, enthält;
(II) Herstellen mindestens einer zweiten Schicht durch Compoundieren und Schmelzextrudieren einer wie oben definierten Mischung I, die ein Gemisch II umfaßt, das einen Feststoff IIIa, wie hierin definiert, enthält und frei ist von einem Feststoff IIIb oder einem Feststoff IIIc, und
(III) anschließendes Zusammenbringen der mindestens einen ersten Schicht mit der mindestens einen zweiten Schicht durch ein herkömmliches Beschichtungsverfahren.

Vorzugsweise wird die mindestens eine zweite Schicht auf einem temporären Träger hergestellt. Dabei können erfindungsgemäß üblicherweise verwendete temporäre Träger, wie z.B. eine Trennfolie aus einem Polymer oder einem vorzugsweise beschichteten Papier, wie z.B. eine silikonisierte Polyesterfolie eingesetzt werden. Die Herstellung dieser zweiten Schicht ist jedoch auch auf einem permanenten Träger, wie z.B. einer Ableiterelektrode oder aber auch ganz ohne Träger möglich. Dabei kann diese Schicht entweder zusammen mit dem Träger extrudiert werden oder direkt auf diesen extrudiert werden.

Das Zusammenbringen bzw. die Herstellung der oben definierten Schichten erfolgt durch drucklose Verfahren zur Beschichtung bzw. Herstellung von Folien, wie z.B. Gießen oder Rakeln, sowie durch Verarbeitungsverfahren unter Druck, wie z.B. Extrudieren, Co-Extrudieren, Laminieren, Kaschieren, Kalandrieren oder Pressen. Gegebenenfalls kann die so hergestellte Verbundfolie durch Strahlung, elektrochemisch oder thermisch vernetzt bzw. gehärtet werden.

Wie sich aus obigem ergibt, ist es somit ohne weiteres möglich einen Verbundkörper mit den Bestandteilen Trennfolie/Separator (zweite Schicht)/ Elektrode (erste Schicht) bereitzustellen.

Ferner ist es möglich durch doppelseitige Beschichtung einen Verbundkörper mit den Bestandteilen Anode/Separator/Kathode zur Verfügung zu stellen.

Die Befüllung derartiger Verbundkörper mit einem Elektrolyt und Leitsalz kann sowohl vor dem Zusammenbringen als auch vorzugsweise nach dem Zusammenbringen der Schichten, ggf. nach dem Kontaktieren mit geeigneten Ableiterelektroden, z.B. einer Metallfolie und sogar nach dem Einbringen der Schichten in ein Batteriegehäuse erfolgen, wobei die spezielle mikroporöse Struktur der Schichten bei Verwendung der erfindungsgemäßen Mischung, insbesondere bedingt durch die Anwesenheit des oben definierten Feststoffs im Separator und ggf. in den Elektroden, das Aufsaugen des Elektrolyten und des Leitsalzes und die Verdrängung der Luft in den Poren ermöglicht. Das Befüllen kann bei Temperaturen von 0 °C bis ungefähr 100°C in Abhängigkeit vom verwendeten Elektrolyt durchgeführt werden.

Die Formkörper werden durch Compoundieren und Schmelzextrudieren, vorzugsweise bei ungefähr 50 bis ungefähr 250 °C, hergestellt.

Als Vorrichtungen zur Extrusion werden dabei vorzugsweise ein Plastifizier-Einschneckenextruder, wie z.B. ein Berstorff-Einwellen-Mischextruder, ein Frenkel-Mischer, ein Plastifikator oder ein Buss-Ko-Kneter, ein Zweischneckenextruder vom gleichlaufenden oder vom gegenlaufenden Typ, wie z.B. ein Extruder mit COLOMBO-Schnecken, ein Extruder mit dichtkämmenden ZSK-Schnecken, ein Extruder mit Holo-Flite-Doppelschnecken, eine Leistritz-Knetpumpe, ein Extruder mit Pasquetti-Doppelschnecke, ein Extruder mit Cotruder-Schnecken, ein Extruder vom Kestermann-Typ, ein Extruder mit Mapré-Doppelschnecken, eine GETECHA-Knetstrangpresse, ein Anger-Tandem-Extruder, ein Zimmermann-Jansen-Extruder, ein Zweiwellen-Durchlaufkneter, wie z.B. ein DSM-Zweiwellenmischer, ein Eck-Mixtruder, ein FCM-Kneter oder ein List-Allphasen Gerät oder ein kontinuierlicher Mehrwellenextruder, wie z.B. ein Vierschnecken-Extruder oder ein Planetwalzen-Extruder, oder eine Kombination aus zwei oder mehr davon verwendet.

Als besonders bevorzugte Vorrichtungen sind Ein- und Zwei-Schneckenmaschinen, wie z. B. einwellige Mischextruder (Reifenhäuser, Krauss Maffei, Berstorff), gleichlaufende oder gegenlaufende, dichtkämmende Zweischneckenkneter (Werner und Pfleiderer, Berstorff, APV), Mehrschneckenextruder, Buss Ko-Kneter oder gegenlaufende, nicht kämmende Kneter (Farrel, JSW) geeignet.

Schnecken und Zylinder der kontinuierlich betriebenen Extrusionsanlage ZSK 30 sind modular aufgebaut. Zur ausreichenden Plastifizierung, Dispergierung und Homogenisierung der Einzelkomponenten besteht das Verfahrensteil aus maximal 15 Zylinderzonen, entsprechend 45 Einheiten Länge pro Durchmesser. Jede Zone ist separat mit einer elektrischen Heizung ausgerüstet. Die Gehäuse werden mit Druckluft oder Wasser gekühlt.

Die Schnecke besteht aus mehreren Förder-, Plastifizier- und Mischzonen. Eine spezielle Konfiguration unterschiedlicher Knet- und Mischelemente ist zur schonenden, homogenen Dispergierung der Feststoffe, explizit der anorganischen Feststoffe, im polymeren Bindemittel notwendig.

Soll der erfindungsgemäße Formkörper als Festelektrolyt in einer elektrochemischen Zelle eingesetzt werden, so sollten eine dissoziierbare, Lithiumkationen enthaltende Verbindung, ein sogenanntes Leitsalz wie oben definiert, und weitere Zusatzstoffe, wie insbesondere organische Lösungsmittel, ein sogenannter Elektrolyt, inkorporiert werden.

Diese Stoffe können teilweise oder vollständig bei der Herstellung der Schicht der Suspension beigemischt oder nach der Herstellung der Schicht in die Schicht eingebracht werden.

Als organische Elektrolyte kommen die vorstehend unter "Weichmacher V" diskutierten Verbindungen in Frage, wobei vorzugsweise die üblichen organischen Elektrolyte, bevorzugt Ester wie Ethylencarbonat, Propylencarbonat, Dimethylcarbonat und Diethylcarbonat oder Gemische solcher Verbindungen eingesetzt werden.

Für elektrochemische Zellen geeignete erfindungsgemäße Festelektrolyte, Separatoren und/oder Elektroden sollten vorteilhaft eine Dicke von 5 bis 500 *µ*m, vorzugsweise 10 bis 500 *µ*m, weiter bevorzugt 10 bis 200 *µ*m und insbesondere 20 bis 100 *µ*m aufweisen.

Wie sich aus dem obigem ergibt, betrifft die vorliegende Erfindung auch die Verwendung eines erfindungsgemäßen Formkörpers oder Verbundkörpers, oder eines Formkörpers bzw. Verbundkörpers, hergestellt mittels eines erfindungsgemäßen Verfahrens zur Herstellung eines Festelektrolyten, eines Separators, einer Elektrode, in einem Sensor, einem elektrochromen Fenster, einem Display, einem Kondensator oder einer ionenleitenden Folie.

Ferner betrifft die Erfindung einen Separator, einen Festelektrolyten, eine Elektrode, einen Sensor, ein elektrochromes Fenster, ein Display, einen Kondensator oder eine ionenleitende Folie umfassend einen erfindungsgemäßen oder erfindungsgemäß hergestellten Form- oder Verbundkörper, sowie eine elektrochemische Zelle, umfassend einen Separator, Festelektrolyt oder eine Elektrode, wie oben definiert, oder eine Kombination aus zwei oder mehr davon.

Diese elektrochemische Zelle kann insbesondere als Autobatterie, Gerätebatterie oder Flachbatterie verwendet werden.

### Beispiele

Zur Veranschaulichung der prinzipiellen Abläufe innerhalb des erfindungsgemäßen Verfahrens sind dieser Anmeldung drei Figuren beigefügt.
- Figur 1: zeigt eine schematische Darstellung der Herstellung einer Kathodenfolie mittels eines Extruders (E) und eines Extruders mit Seitenextruder (SE);
- Figur 2: zeigt eine schematische Darstellung einer Co-Extrusion einer erfindungsgemäß verwendeten Mischung zusammen mit einer PET-Folie;

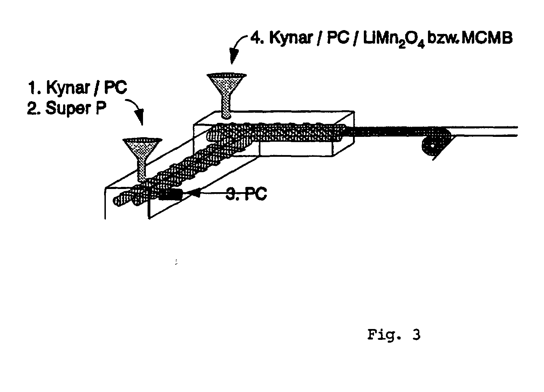

- Figur 3: zeigt eine schematische Darstellung der Herstellung einer Kathoden-(LiMn₂O₄) bzw. Anodenfolie (MCMB).

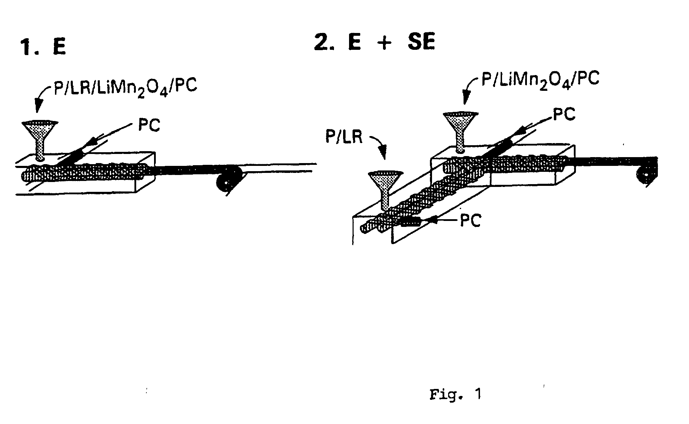

Zunächst sollen die Prinzipien des erfindungsgemäßen Herstellungsverfahrens, wie sie in Figur 1 schematisch dargestellt sind, beispielhaft an einem gleichsinnig drehenden, dichtkämmenden Zweischneckenkneter ZSK 30 der Fa. Werner und Pfleiderer beschrieben werden.

Der gleichsinnig drehende und dichtkämmende und damit selbstreinigende Extruder besteht aus mehreren (bis zu 15) variablen montierbaren Einzelzonen, die über Heizkreisläufe temperiert werden können.

### Zugabe der Komponenten:

a) Die Polymere (P) wurden mit dem Feststoff und einem Teil des Weichmachers in einem Fluidmischer homogen verteilt. Die Zugabe erfolgte über eine Dosierwaage. Gegebenenfalls wurde der Extruder mit Stickstoff inertisiert.
b) Der Weichmacher wurde gegebenenfalls über eine Dosierpumpe in der Aufschmelzzone des Extruders zudosiert.
c) Der Leitruß (LR) wurde über einen Seitenextruder in der Aufschmelzphase zudosiert. Der Seitenextruder war ein Ein- oder Zweiwellenextruder. Gegebenenfalls wurde eine homogene Schmelze aus Polymer, Weichmacher und Leitruß und gegebenenfalls Dispergierharz in dem Seitenextruder hergestellt und in den Hauptextruder seitlich zugefahren.

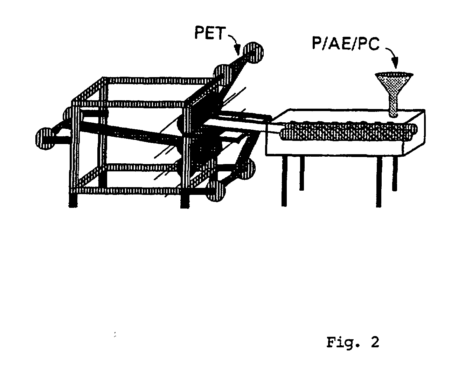

Die Folie wurde über eine Flachdüse ausgetragen und kalandriert. Gegebenenfalls wurde die Folie zwischen zwei Folien (z.B. Polyethylenterephthalat) coextrudiert (Fig. 2). Die Dicke der Batteriefolien lag zwischen 10 - 1000 *µ*m.

### Als Vorteile des erfindungsgemäßen Herstellungsverfahrens sind zu nennen:

1. Lösungsmittel entfällt
2. Trocknung der Batteriefolien entfällt
3. Extraktion und Extraktionslösungsmittel entfallen
4. Folie kann ohne weitere Vorbehandlung in die Batterie eingebaut werden
5. Homogenere Verteilung der Feststoffe
6. Bessere mechanische Stabilität der Filme (als über Gießtechnologie hergestellte Folie.

### Beispiel 1: Herstellung einer Kathodenfolie

| | |
|---|---|
| 4.910 g | LiMn₂O₄ |
| 1.310 g | Polyvinylidenfluorid-*co*-hexafluoropropen Kynar® 2801 (Elf Atochem) |
| 1.030 g | Leitruß Super® P (MMM Carbon) |
| 2.740 g | Propylencarbonat (PC) |

### Aufbau des Extruders:

Gleichsinnig drehender Zweiwellenhauptextruder ZSK30 mit 10 variablen heizbaren Heizzonen. In der vierten Zone war ein gleichsinnig drehender Zweiwellenseitenextruder ZSK30 mit 6 variablen heizbaren Heizzonen angebaut.

### Herstellung:

180 g/h eines Gemischs aus 100 Teilen Kynar® 2801 und 5 Teilen Propylencarbonat und 442 g/h Leitruß Super® P wurden in die erste Zone des Seitenextruder ZSK30 zudosiert. Weiterhin wurden 1075 g/h Propylencarbonat in die Aufschmelzzone (Zone 2) des Seitenextruders zugepumpt. Diese Schmelze wurde in die Aufschmelzzone (Zone 4) des Hauptextruder zugefahren. Außerdem wurden 2.600 g einer Mischung aus 15,1 Teilen Kynar® 2801, 81,1 Teilen LiMn₂O₄ und 3,8 Teilen Propylencarbonat in die erste Zone des Hauptextruders zudosiert. Die Innentemperatur in den beiden Extrudern betrug 150°C. Über eine beheizbare Breitschlitzdüse (150°C) mit einer Spaltbreite von 5 mm wurde die Schmelze ausgetragen und zwischen zwei PET-Folien coextrudiert und anschließend kalandriert.

Die erhaltene Folie besaß folgende Eigenschaften:

| | |
|---|---|
| Oberflächenwiderstand | 140 Ohm |
| Foliendicke | 100-500 *µ*m |

### Beispiel 2: Herstellung einer Anodenfolie

### Zusammensetzung:

| | |
|---|---|
| 5.600 g | MCMB (Osaka Gas) |
| 1.500 g | Polyvinylidenfluorid-*co*-hexafluoropropen Kynar® 2801 (Elf Atochem) |
| 400 g | Leitruß Super® P (MMM Carbon) |
| 2.500 g | Propylencarbonat |

### Aufbau des Extruders: s. Beispiel 1

### Herstellung:

180 g/h einer Mischung aus 100 Teilen Kynar® 2801 und 5 Teilen Propylencarbonat und 150 g/h Leitruß Super® P wurden in die erste Zone des Seitenextruder ZSK30 zudosiert. Weiterhin wurden 841 g/h Propylencarbonat in die Aufschmelzzone (Zone 2) des Seitenextruders zugepumpt.

Diese Schmelze wurde in die Aufschmelzzone (Zone 4) des Hauptextruder zugefahren.

Außerdem wurden 2.600 g/h eines Gemischs aus 15,1 Teilen Kynar® 2801, 80,8 Teilen MCMB und 3,4 Teilen Propylencarbonat in die erste Zone des Hauptextruders zudosiert. Die Innentemperatur in den beiden Extrudern betrug 150°C.

Über eine beheizbare Breitschlitzdüse (150°C) mit einer Spaltbreite von 5 mm wurde die Schmelze ausgetragen und zwischen zwei PET-Folien coextrudiert und anschließend kalandriert.

Die erhaltene Folie besaß folgende Eigenschaften:

| | |
|---|---|
| Oberflächenwiderstand | 80 Ohm |
| Foliendicke: | 50-300 *µ*m |

### Beispiel 3: Herstellung einer Separatorfolie

### Zusammensetzung:

| | |
|---|---|
| 3.000 g | Polyvinylidenfluorid-*co*-hexafluoropropen Kynar® 2801 (Elf Atochem) |
| 2.000 g | Aerosil® R 812 (Degussa) (AE) |
| 5.000 g | Propylencarbonat |

### Herstellung:

4.500 g/h eines Gemischs aus 30 Teilen Kynar® 2801, 20 Teilen Aerosil® R 812 und 50 Teilen Propylencarbonat wurden in einen gleichsinnig drehenden Zweiwellenextruder ZSK40 mit 10 variablen heizbaren Heizzonen zudosiert. Die Innentemperatur im Extruder betrug 150°C. Über eine beheizbare Breitschlitzdüse mit einer Spaltbreite von 1 mm wurde die Schmelze ausgetragen und zwischen zwei PET-Folien coextrudiert und anschließend kalandriert.

Die erhaltene Folie besaß folgende Foliendicke:
Foliendicke: 20 bis 100 *µ*m.

### Beispiel 4

Aus der Kathodenfolie gemäß Beispiel 1, der Anodenfolie gemäß Beispiel 2 und der Separatorfolie gemäß Beispiel 3 wurde ein Verbundkörper mit folgendem Aufbau durch Laminieren bei einer Temperatur von 140°C hergestellt:
Kathodenfolie/Metallgitterfolie (Aluminium)/Kathodenfolie
Separatorfolie
Anodenfolie/Metallgitterfolie (Kupfer)/Kathodenfolie.

Der Verbundkörper wurde eine halbe Stunde in eine 1 molare Lösung von LiPF₆ in Dimethylcarbonat/Ethylencarbonat eingetaucht und anschließend in ein Flachbatteriegehäuse eingebracht. Der Verbundkörper wies eine gute Quellresistenz auf.

## Patentansprüche

1. Verfahren zur Herstellung eines Formkörpers, vorzugsweise eines folienförmigen Formkörpers, das folgende Stufe umfaßt:
I) Compoundieren und Schmelzextrudieren einer Mischung I, die ein Gemisch II umfaßt, das enthält:
a) 1 bis 95 Gew.-% mindestens eines Feststoffs III mit einer Primärpartikelgröße von 5 nm bis 20 *µ* m, das ausgewählt wird aus der Gruppe bestehend aus einem elektrochemisch inerten Feststoff IIIa, einer beim Laden zur Abgabe von Lithiumionen befähigte Verbindung IIIb und einer beim Laden zur Aufnahme von Lithiumionen befähigten Verbindung IIIc, und einem Gemisch des Feststoffs IIIa mit der Verbindung IIIb oder der Verbindung IIIc,
b) 5 bis 99 Gew.-% mindestens eines Copolymers IV aus Vinylidenfluorid (VdF) und Hexafluorpropylen (HFP) mit einem Gehalt an HFP von 8 bis 25 Gew.-%, und
c) 1 bis 200 Gew.-%, bezogen auf die Gesamtmenge der Komponenten a) und b), eines Weichmachers V, der ausgewählt wird aus der Gruppe bestehend aus Dibutylphthalat, Dimethylphthalat, Diethylphthalat, Tris(butoxyethyl)phosphat, Propylencarbonat, Ethylencarbonat, Trimethyltrimellitat und Gemischen aus zwei oder mehr davon
wobei der Gewichtsanteil des Gemischs II an der Mischung I 1 bis 100 Gew.-% beträgt.

2. Verfahren nach Anspruch 1, wobei der Feststoff III ein Feststoff IIIa ist, der ausgewählt wird aus der Gruppe bestehend aus einem anorganischen Feststoff, vorzugsweise einem anorganischen basischen Feststoff, ausgewählt aus der Gruppe bestehend aus Oxiden, Mischoxiden, Silicaten, Sulfaten, Carbonaten, Phosphaten, Nitriden, Amiden, Imiden und Carbiden der Elemente der I., II., III. oder IV. Hauptgruppe oder der IV. Nebengruppe des Periodensystems; einem Polymer, ausgewählt aus der Gruppe bestehend aus Polyethylen, Polypropylen, Polystyrol, Polytetrafluorethylen, Polyvinylidenfluorid; Polyamiden; Polyimiden; und einer Feststoffdispersion enthaltend ein derartiges Polymer; und einem Gemisch aus zwei oder mehr davon.

3. Verfahren nach Anspruch 1 oder 2, wobei der Feststoff III eine beim Laden zur Abgabe von Lithiumionen befähigte Verbindung IIIb ist, die ausgewählt wird aus der Gruppe bestehend aus LiCoO₂, LiNiO₂, LixMnO₂ (0<x≤1), LiₓMn₂O₄ (0<x≤2), LiₓMoO₂ (0<x≤2), LiₓMnO₃ (0<x≤1), LiₓMnO₂ (0<x≤2), LiₓMn₂O₄ (0<x≤2), LiₓV₂O₄ (0<x≤2.5), LiₓV₂O₃ (0<x≤3.5), LiₓVO₂ (0<x≤1), LiₓWO₂ (0<x≤1), LiₓWO₃ (0<x≤1), LiₓTiO₂ (0<x≤1), LiₓTi₂O₄ (0<x≤2), LiₓRuO₂ (0<x≤1), LiₓFe₂O₃ (0<x≤2), LiₓFe₃O₄ (0<x≤2), LiₓCr₂O₃ (0<x≤3), LiₓCr₃O₄ (0<x≤3.8), LiₓV₃S₅ (0<x≤1.8), LiₓTa₂S₂ (0<x≤1), LiₓFeS (0<x≤1), LiₓFeS₂ (0<x≤1), LiₓNbS₂ (0<x≤2.4), LiₓMoS₂ (0<x≤3), LiₓTiS₂ (0<x≤2), LiₓZrS₂ (0<x≤2), LiₓNbSe₂ (0<x≤3), LiₓVSe₂ (0<x≤1), LiₓNiPS₂ (0<x≤1,.5), LiₓFePS₂ (0<x≤1.5), einem Gemisch aus zwei oder mehr davon, und einem Gemisch der Verbindung IIIb mit dem Feststoff IIIa; und die Mischung I zusätzlich 0,1 bis 20 Gew.-%, bezogen auf das Gemisch II, Leitruß enthält.

4. Verfahren nach Anspruch 1 oder 2, wobei der Feststoff III eine beim Laden zur Aufnahme von Lithiumionen befähigte Verbindung IIIc ist, die ausgewählt wird aus der Gruppe bestehend aus Lithium, einer Lithium enthaltenden Metallegierung, micronisiertem Kohlenstoffruß, natürlichem und synthetischem Graphit, synthetisch graphitiertem Kohlestaub, einer Kohlefaser, Titanoxid, Zinkoxid, Zinnoxid, Molybdänoxid, Wolframoxid, Titancarbonat, Molybdäncarbonat, Zinkcarbonat, einem Gemisch aus zwei oder mehr davon, und einem Gemisch der Verbindung IIIc mit dem Feststoff IIIa; und die Mischung I zusätzlich bis zu 20 Gew.-%, bezogen auf das Gemisch II, Leitruß enthält.

5. Verfahren nach einem der Ansprüche 1 bis 4, wobei die Mischung I während oder nach der Schmelzextrusion vernetzt wird.

6. Verfahren zur Herstellung eines Verbundkörpers, das die folgenden Stufen umfaßt:
(I) Herstellen mindestens einer ersten Schicht durch Compoundieren und Schmelzextrudieren einer wie in Anspruch 1 definierten Mischung I, die ein Gemisch II umfaßt, das einen Feststoff IIIb, oder einen Feststoff IIIc, wie in Anspruch 3 bzw. 4 definiert, enthält;
(II) Herstellen mindestens einer zweiten Schicht durch Compoundieren und Schmelzextrudieren einer wie in Anspruch 1 definierten Mischung I, die ein Gemisch II umfaßt, das einen Feststoff IIIa, wie in Anspruch 2 definiert, enthält und frei ist von einem Feststoff IIIb oder einem Feststoff IIIc, und
(III) anschließendes Zusammenbringen der mindestens einen ersten Schicht mit der mindestens einen zweiten Schicht durch ein herkömmliches Beschichtungsverfahren.

7. Formkörper, vorzugsweise folienförmiger Formkörper, erhältlich durch ein Verfahren, das folgende Stufe umfaßt:
I) Compoundieren und Schmelzextrudieren einer Mischung I, die ein Gemisch II umfaßt, das enthält:
a) 1 bis 95 Gew.-% mindestens eines Feststoffs III mit einer Primärpartikelgröße von 5 nm bis 20 *µ*m, das ausgewählt wird aus der Gruppe bestehend aus einem elektrochemisch inerten Feststoffs IIIa, einer beim Laden zur Abgabe von Lithiumionen Verbindung IIIb und einer beim Laden zur Aufnahme von Lithiumionen befähigten Verbindung IIIc, und einem Gemisch des Feststoffs IIIa mit der Verbindung IIIb oder der Verbindung IIIc
b) 5 bis 99 Gew.-% mindestens eines Copolymers IV aus Vinylidenfluorid (VdF) und Hexafluorpropylen (HFP) mit einem Gehalt an HFP von 8 bis 25 Gew.-%, und
c) 1 bis 200 Gew.-%, bezogen auf die Gesamtmenge der Komponenten a) und b), eines Weichmachers V, der ausgewählt wird aus der Gruppe bestehend aus Dibutylphthalat, Dimethylphthalat, Diethylphthalat, Tris(butoxyethyl)phosphat, Propylencarbonat, Ethylencarbonat, Trimethyltrimellitat und Gemischen aus zwei oder mehr davon
wobei der Gewichtsanteil des Gemischs II an der Mischung I 1 bis 100 Gew.-% beträgt.

8. Verbundkörper, erhältlich durch ein Verfahren, das die folgenden Stufen umfaßt:
(I) Herstellen mindestens einer ersten Schicht durch Compoundieren und Schmelzextrudieren einer wie in Anspruch 1 definierten Mischung I, die ein Gemisch II umfaßt, das einen Feststoff IIIb, oder einen Feststoff IIIc, wie in Anspruch 3 bzw. 4 definiert, enthält;
(II) Herstellen mindestens einer zweiten Schicht durch Compoundieren und Schmelzextrudieren einer wie in Anspruch 1 definierten Mischung I, die ein Gemisch II umfaßt, das einen Feststoff IIIa, wie in Anspruch 2 definiert, enthält und frei ist von einem Feststoff IIIb oder einem Feststoff IIIc, und
(III) anschließendes Zusammenbringen der mindestens einen ersten Schicht mit der mindestens einen zweiten Schicht durch ein herkömmliches Beschichtungsverfahren.

9. Separator, Festelektrolyt, Elektrode, Sensor, elektrochromes Fenster, Display, Kondensator oder eine ionenleitende Folie umfassend einen Formkörper gemäß Anspruch 7 oder einen Formkörper, hergestellt mittels eines Verfahrens gemäß einem der Ansprüche 1 bis 5 oder einen Verbundkörper gemäß Anspruch 8 oder einen Verbundkörper hergestellt mittels eines Verfahrens gemäß Anspruch 6.

10. Elektrochemische Zelle, umfassend einen Separator, Festelektrolyt oder eine Elektrode gemäß Anspruch 9 oder eine Kombination aus zwei oder mehr davon.

## Claims

1. Process for the manufacture of a moulded body, preferably of a film-like moulded body, comprising the following step:
I) Compounding and melt-extruding of a mixture I comprising a mixture II, containing:
a) 1 to 95 weight per cent of at least one solid III having a primary particle size of 5 nm to 20 µm, selected from the group consisting of an electrochemically inert solid IIIa, a compound IIIb being capable of releasing lithium ions upon being charged and a compound IIIc being capable of accepting lithium ions upon being charged, and a mixture of solid IIIa with compound IIIb or compound IIIc,
b) 5 to 99 weight per cent of at least one Copolymer IV made of vinylidene fluoride (VdF) and hexafluoropropylene (HFP) having a HFP content of 8 to 25 weight per cent, and
c) 1 to 200 weight per cent, in relation to the over all amount of components a) and b), of a softening agent V, selected from the group consisting of dibutylphthalate, dimethylphthalate, diethylphthalate, tris(butoxyethyl)phosphate, propylene carbonate, ethylene carbonat, trimethyltrimellitate and mixtures of two or more thereof
with the weight proportion of mixture II in relation to mixture I being 1 to 100 weight per cent.

2. Process according to claim I in which solid III is a solid IIIa, selected from the group consisting of an inorganic solid, preferably an inorganic basic solid, selected from the group consisting of oxides, mixed oxides, silicates, sulfates, carbonates, phosphates, nitrides, amides, imides and carbides of the elements of the I., II., III., or IV. main group or of the IV. subgroup of the periodic system; a polymer, selected from the group consisting of polyethylene, polystyrene, polytetrafluorethylene, polyvinylidene fluoride; polyamides; polyimides; and a dispersion of a solid containing such a polymer; and a mixture of two or more thereof.

3. Process according to claim 1 or 2 in which solid III is a compound IIIb being capable of releasing lithium ions upon being charged, selected from the group consisting of LiCoO₂, LiNiO₂, LixMnO₂ (0<x≤1), LiₓMn₂O₄ (0<x≤2), LiₓMoO₂ (0<x≤2), LiₓMnO₃ (0<x≤1), LiₓMnO₂ (0<x≤2), LiₓMn₂O₄ (0<x≤2), LiₓV₂O₄ (0<x≤2.5), LiₓV₂O₃ (0<x≤3.5), LiₓVO₂ (0<x≤1), LiₓWO₂ (0<x≤1), LiₓWO₃ (0<x≤1), LiₓTiO₂ (0<x≤1), LiₓTi₂O₄ (0<x≤2), LiₓRuO₂ (0<x≤1), LiₓFe₂O₃ (0<x ≤2), LiₓFe₃O₄ (0< x ≤ 2), LiₓCr₂O₃ (0<x≤3), LiₓCr₃O₄ (0<x≤3.8), LiₓV₃S₅ (0<x≤1.8), LiₓTa₂S₂ (0<x≤1), LiₓFeS (0<x≤1), LiₓFeS₂ (0<x≤1), LiₓNbS₂ (0<x≤2.4), LiₓMoS₂ (0<x≤3), LiₓTiS₂ (0<x≤2), LiₓZrS₂ (0<x≤2), LiₓNbSe₂ (0<x≤3), LiₓVSe₂ (0<x≤1), LiₓNiPS₂ (0<x≤1,.5), LiₓFePS₂ (0<x≤1.5)
, a mixture of two or more thereof, and a mixture of compound IIIb with the solid IIIa; and mixture I additionally containing 0.1 to 20 weight per cent, in relation to mixture II, of conducting soot.

4. Process according to claim 1 or 2 in which the solid III is a compound IIIc being capable of accepting lithium ions upon being charged, selected from the group consisting of lithium, a metal alloy containing lithium, micronized soot, natural or synthetic graphit, synthetically graphitized coal dust, a carbon fiber, titanium oxide, zinc oxide, tin oxide, molybdenium oxide, tungsten oxide, titanium carbonate, molybdenium carbonate, zinc carbonate, a mixture of two or more thereof, and a mixture of compound IIIc with solid IIIa; and mixture I containing, in relation to mixture II, additionally up to 20 weight per cent of conducting soot.

5. Process according to one of claims 1 to 4 with mixture I being cross-linked during or after melt-extruding.

6. Process for the manufacture of a composite body, comprising the following steps:
(I) Manufacturing of at least a first layer by compounding and melt-extruding of a mixture I as defined in claim 1, comprising a mixture II, containing a solid IIIb or a solid IIIc, as defined in claim 3 or 4, respectively;
(II) manufacturing of at least a second layer by compounding and melt-extruding of a mixture I as defined in claim 1, comprising a mixture II containing a solid IIIa, as defined in claim 2, and is free of a solid IIIb or a solid IIIc, and
(III) subsequent contacting of the at least one first layer with the at least one second layer by a conventional coating process.

7. Moulded body, preferably film-like moulded body, obtainable by a process comprising the following step:
I) Compounding and melt-extruding of a mixture I comprising a mixture II, containing:
a) 1 to 95 weight per cent of at least one solid III having a primary particle size of 5 nm to 20 µm, selected from the group consisting of an electrochemically inert solid IIIa, a compound IIIb being capable of releasing lithium ions upon charging and a compound IIIc being capable of accepting lithium ions upon being charged, and a mixture of solid IIIa with compound IIIb or compound IIIc,
b) 5 to 99 weight per cent of at least one Copolymer IV made of vinylidene fluoride (VdF) and hexafluoropropylene (HFP) having a HFP content of 8 to 25 weight per cent, and
c) 1 to 200 weight per cent, in relation to the over all amount of components a) and b), of a softening agent V, selected from the group consisting of dibutylphthalate, dimethylphthalate, diethylphthalate, tris(butoxyethyl)phosphate, propylene carbonate, ethylene carbonat, trimethyltrimellitate and mixtures of two or more thereof
with the weight proportion of mixture II in relation to mixture I being 1 to 100 weight per cent.

8. Composite body, obtainable by a process comprising the following steps:
(I) Manufacture of at least one layer by compounding and melt extruding of a mixture I as defined in claim 1, comprising a mixture II, containing a solid IIIb or a solid IIIc, as defined in claim 3 or 4, respectively,
(II) manufacture of at least a second layer by compounding and melt extruding of a mixture I as defined in claim 1, comprising a mixture II defining a solid IIIa, as defined in claim 2, and is free of a solid IIIb or a solid IIIc, and
(III) subsequent contacting of the at least one first layer with the at least one second layer by a conventional coating process.

9. Separator, solid electrolyte, electrode, sensor, electrochromic window, display, capacitor or ion conducting film comprising a moulded body according to claim 7, or a moulded body manufactured by a process according to one of claims 1 to 5, or a composite body according to claim 8, or a composite body manufactured by a process according to claim 6.

10. Electrochemical element, comprising a separator, solid electrolyte or an electrode according to claim 9 or a combination of two or more thereof.

## Revendications

1. Procédé de fabrication d'un objet façonné, de préférence un objet façonné en forme de feuille, qui comporte l'étape suivante :
I) compoundage et extrusion à l'état fondu d'un mélange I, qui comporte un mélange II, qui contient :
a) de 1 à 95 % en poids d'au moins une matière solide III ayant une granulométrie primaire de 5 nm à 20 µm, qui est choisie dans l'ensemble comprenant une matière solide III, inerte d'un point de vue électrochimique, un composé IIIb, à même de céder des ions lithium lors de la charge, et un composé IIIc, à même d'absorber des ions lithium lors de la charge, et un mélange de la matière solide IIIa et du composé IIIb ou du composé IIIc,
b) de 5 à 99 % en poids d'au moins un copolymère IV de fluorure de vinylidène (VdF) et d'hexafluoropropylène (HFP) ayant une teneur en HFP de 8 à 25 % en poids, et
c) de 1 à 200 % en poids, par rapport à la quantité totale des composants a) et b), d'un plastifiant V choisi dans l'ensemble comprenant le phtalate de dibutyle, le phtalate de diméthyle, le phtalate de diéthyle, le phosphate de tris(butoxy)éthyle, le carbonate de propylène, le carbonate d'éthylène, le trimellitate de triméthyle et les mélanges d'au moins deux d'entre eux,
où le rapport en poids du mélange II au mélange I est de 1 à 100 % en poids.

2. Procédé selon la revendication 1, dans lequel la matière solide III est une matière solide III inerte d'un point de vue électrochimique, qui est choisie dans l'ensemble comprenant une matière solide inorganique, de préférence une matière solide basique inorganique choisie dans l'ensemble comprenant les oxydes, les oxydes mixtes, les carbonates, les silicates, les sulfates, les phospha-tes, les amides, les imides, les nitrures et les carbures des éléments du premier, du deuxième, du troisième ou du quatrième groupes principaux ou du quatrième groupe secondaire du Tableau Périodique, un polymère choisi dans l'ensemble comprenant le polyéthylène, le polypropylène, le polystyrène, le polytétrafluoréthylène, le poly(fluo-rure de vinylidène), les polyamides, les polyimides ; une dispersion de matière solide contenant un polymère de ce type ; et un mélange d'au moins deux d'entre eux.

3. Procédé selon la revendication 1 ou 2, dans lequel la matière active III est un composé IIIb, à même de céder des ions lithium lors de la charge, qui est choisi dans l'ensemble comprenant LiCoO₂, LiNiO₂, LiₓMnO₂ (0<x≤1), LiₓMn₂O₄ (0<x≤2), LiₓMoO₂ (0<x≤2), LiₓMnO₃ (0<x≤1), LiₓMnO₂ (0<x≤2), LiₓMn₂O₄ (0<x≤2), LiₓV₂O₄ (0<x≤2,5), LiₓV₂O₃ (0<x≤3,5), LiₓVO₂ (0<x≤1),LiₓWO₂ (0<x≤1),LiₓWO₃ (0<x≤1), LiₓTiO₂ (0<x≤1),LiₓTi₂O₄ (0<x≤2), LiₓRuO₂ (0<x≤1), LiₓFe₂O₃ (0<x≤2), LiₓFe₃O₄ (0<x≤2), LiₓCr₂O₃ (0<x≤3), LiₓCr₃O₄ (0<x≤3,8), LiₓV₃S₅ (0<x≤1,8), LiₓTa₂S₂ (0<x≤1), LiₓFeS (0<x≤1), LiₓFeS₂ (0<x≤1), LiₓNbS₂ (0<x≤2,4), LiₓMoS₂ (0<x≤3), LiₓTiS₂ (0<x≤2), LiₓZrS₂ (0<x≤2), LiₓNbSe₂ (0<x≤3), LiₓVSe₂ (0<x≤1), LiₓNiPS₂ (0<x≤1,5), LiₓFePS₂ (0<x≤1,5), un mélange d'au moins deux d'entre eux, et un mélange du composé IIIb avec la matière solide IIIa, et le mélange I additionné de 0,1 à 20 % en poids, par rap-port au mélange II, de noir de carbone conducteur.

4. Procédé selon la revendication 1 ou 2, dans lequel la matière active III est un composé IIIc, à même d'absor-ber des ions lithium lors de la charge, qui est choisi dans l'ensemble comprenant le lithium, un alliage métal-lique contenant du lithium, un noir de carbone micronisé, une graphite naturelle et synthétique, une poudre de char-bon graphité de synthèse, une fibre de carbone, l'oxyde de titane, l'oxyde de zinc, l'oxyde d'étain, l'oxyde de molybdène, l'oxyde de tungstène le carbonate de titane, le carbonate de molybdène, le carbonate de zinc, un mélange d'au moins deux d'entre eux, et un mélange du composé IIIc avec la matière active IIIa, et le mélange I additionné d'une quantité allant jusqu'à 20 % en poids, par rapport au mélange II, de noir de carbone conducteur.

5. Procédé selon l'une des revendications 1 à 4, dans lequel le mélange est réticulé pendant ou après l'extrusion à l'état fondu.

6. Procédé de fabrication d'un corps composite, qui comporte les étapes suivantes:
(I) Fabrication d'au moins une première couche par com-poundage et extrusion à l'état fondu d'un mélange I tel que défini dans la revendication 1, qui comporte un mélange II, lequel contient une matière solide IIIb ou une matière solide IIIe telle que définie respectivement dans la revendi-cation 3 ou 4 ;
(II) Fabrication d'au moins une deuxième couche par com-poundage et extrusion à l'état fondu d'un mélange I tel que défini dans la revendication 1, qui comporte un mélange II, lequel contient une matière solide IIIa telle que définie dans la revendication 2 et est exempt d'une matière solide IIIb ou d'une matière solide IIIc, et
(III) puis réunion de la première ou des premières couches à au moins une deuxième couche par une opération classique de revêtement.

7. Objet façonné, de préférence objet façonné en forme de feuille, pouvant être obtenu par un procédé comportant l'étape suivante :
I) compoundage et extrusion à l'état fondu d'un mélange I, qui comporte un mélange II, qui contient:
a) de 1 à 95 % en poids d'au moins une matière solide III ayant une granulométrie primaire de 5 nm à 20 µm, qui est choisie dans l'ensemble comprenant une matière solide III, inerte d'un point de vue électrochimique, un composé IIIb, à même de céder des ions lithium lors de la charge, et un composé IIIc, à même d'absorber des ions lithium lors de la charge, et un mélange de la matière solide IIIa et du composé IIIb ou du composé IIIc,
b) de 5 à 99 % en poids d'au moins un copolymère IV de fluorure de vinylidène (VdF) et d'hexafluoropropylène (HFP) ayant une teneur en HFP de 8 à 25 % en poids, et
c) de 1 à 200 % en poids, par rapport à la quantité totale des composants a) et b), d'un plastifiant V choisi dans l'ensemble comprenant le phtalate de dibutyle, le phtalate de diméthyle, le phtalate de diéthyle, le phosphate de tris(butoxy)éthyle, le carbonate de propylène, le carbonate d'éthylène, le trimellitate de triméthyle et les mélanges d'au moins deux d'entre eux,
où le rapport en poids du mélange II au mélange I est de 1 à 100 % en poids.

8. Corps composite pouvant être obtenu par un procédé comportant les étapes suivantes :
(I) Fabrication d'au moins une première couche par com-poundage et extrusion à l'état fondu d'un mélange I tel que défini dans la revendication 1, qui comporte un mélange II, lequel contient une matière solide IIIb ou une matière solide IIIe telle que définie respectivement dans la revendi-cation 3 ou 4 ;
(II) Fabrication d'au moins une deuxième couche par com-poundage et extrusion à l'état fondu d'un mélange I tel que défini dans la revendication 1, qui comporte un mélange II, lequel contient une matière solide IIIa telle que définie dans la revendication 2 et est exempt d'une matière solide IIIb ou d'une matière solide IIIc, et
(III) puis réunion de la première ou des premières couches à au moins une deuxième couche par une opération classique de revêtement.

9. Séparateur, électrolyte solide, électrode, cap-teur, fenêtre électrochrome, dispositif d'affichage, con-densateur, ou feuille conductrice d'ions comportant un objet façonné selon la revendication 7 ou un objet façonné fabriqué par un procédé selon l'une des revendications 1 à 5, ou un corps composite selon la revendication 8, ou un corps composite fabriqué par un procédé selon la reven-dication 6.

10. Cellule électrochimique comportant un séparateur, un électrolyte solide ou une électrode selon la revendi-cation 9 ou une combinaison d'au moins deux d'entre eux.
